# EUROPEAN PATENT SPECIFICATION

(11) **EP 2 282 492 B1**
(45) Date of publication and mention of the grant of the patent: **22.05.2019**
(21) Application number: 10165134.7
(22) Date of filing: 07.06.2010
(51) Int. Cl.: H04M 1/23, H01H 13/64, H01H 13/704, H01H 13/85

(54) **Keyboard assembly for a mobile device**
Tastenfeldanordnung für eine mobile Vorrichtung
Ensemble de clavier pour dispositif mobile

(30) Priority: 28.07.2009 US 510397
(43) Date of publication of application: 09.02.2011
(73) Proprietor: BlackBerry Limited, Waterloo, ON N2K 0A7 (CA)
(72) Inventor: Fyke, Steven Henry, Waterloo Ontario N2L 3W8 (CA)
(74) Representative: Howson, Richard Giles Bentham

(56) References cited:
- EP-A2- 1 816 662
- DE-A1- 4 304 304

## Description

### BACKGROUND OF THE DISCLOSURE

This disclosure is directed to personal communication devices, and more specifically to a keyboard assembly of a mobile communication device.

Mobile communication devices are well known and are utilized for both business and personal use. Conventional mobile communication devices are typically two-way communication devices that offer voice and data communication, such as email and text messaging. Additional features such as Internet browsing, navigation systems and calendar applications are also available on some conventional devices.

Typical mobile communication devices include a multi-part keyboard structure including, among other things, a keyboard having a plurality of keys configured for typing phone numbers, email, text messages, and the like. Such keyboards can either be a full QWERTY keyboard, where each key is associated with a corresponding letter, or a reduced keyboard, where multiple letters are associated with a corresponding key.

Conventional keyboard structures also typically include a dome sheet located between the keyboard and a circuit board and having a number of domes. Upon actuation of the keys, the corresponding domes engage contacts on the circuit board, enabling activation of commands for various applications. Although some dome sheets provide one-stage switches, it is sometimes useful to provide a two-stage dome switch, such as when taking a picture. Specifically, upon a first actuation of the key, the auto-focus function is enabled, and upon a second actuation of the key, the picture is taken. Such two-stage switches are useful when operating functions such as the camera, but typically require more complex constructions. In addition, such assemblies are typically more costly than one-stage switch assemblies.

US patent No. 5313027 describes a push switch capable of performing a first switching operation and subsequently a second switching operation when a pressing force is applied to the switch. The push switch includes an insulating membrane having at least one dome with at least a portion thereof overlaid by or serving as an inner conductor and at least a portion of its outer periphery overlaid by or serving as an outer conductor, an insulating substrate having thereupon an inner pole contact disposed at a position opposing to the inner conductor and an outer pole contact disposed at a position opposing to the outer conductor, respectively, and a spacer placed between the insulating membrane and the insulating substrate for spacing the conductor apart from the pole contacts during the time when no pressing force is applied to the switch. When a light pressing force is applied to the dome, the outer conductor will first come in contact with the outer pole contact causing a first switching operation to take place, and subsequently with a further pressing, the inner conductor will come in contact with the inner contact causing a second switching operation to take place.

European patent application no. EP 1816662 describes a mobile terminal keypad having a plurality of key switches on the keypad that provides a first signal or a second signal according to the pressure applied to the key switch. In each of the plurality of key switches, a plate is provided to sequentially contact with a first contact and a second contact according to the applied pressure.

The invention is as defined by independent claim 1. Particular embodiments of the invention are present in the dependent claims.

### BRIEF DESCRIPTION OF THE DRAWINGS

For a better understanding of the various embodiments described herein and to show more clearly how they may be carried into effect, reference will now be made, by way of example only, to the accompanying drawings which show at least one exemplary embodiment and in which:
FIGURE 1 is a block diagram showing the components of a mobile device in accordance with the present disclosure;
FIGURE 2 is a front perspective view of the mobile device;
FIGURE 3 is a cross-sectional view of a first position of a keyboard structure in accordance with the present disclosure taken along line 2-2 of FIGURE 2 and in the direction indicated;
FIGURE 4 is a cross-sectional view of a second position of the keyboard structure taken along line 2-2 of FIGURE 2 and in the direction indicated;
FIGURE 5 is a cross-sectional view of a third position of the keyboard structure taken along line 2-2 of FIGURE 2 and in the direction indicated;
FIGURE 6 is a cross-sectional view of a fourth position of the keyboard structure taken along line 2-2 of FIGURE 2 and in the direction indicated;
FIGURE 7 is a contact sheet of the keyboard structure having a plurality of contacts arranged in a first pattern thereon; and
FIGURE 8 is a contact sheet of the keyboard structure having a plurality of contacts arranged in a second pattern thereon.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a keyboard structure for a mobile wireless communication device, hereafter referred to as a mobile device, which can be configured according to an IT policy. Examples of applicable communication devices include pagers, cellular phones, cellular smart-phones, wireless organizers, personal digital assistants, computers, laptops, handheld wireless communication devices, wirelessly enabled notebook computers and the like.

More specifically, a keyboard assembly for a mobile device having a housing is provided. The keyboard assembly includes a circuit board provided within the housing and having a plurality of contact assemblies thereon, a keyboard having a plurality of keys and being provided in a front face of the housing, and a dome sheet assembly arranged between the keyboard and the circuit board, the dome sheet assembly including a dome carrier configured for carrying a plurality of domes, wherein a gap is defined between the circuit board and the dome sheet.

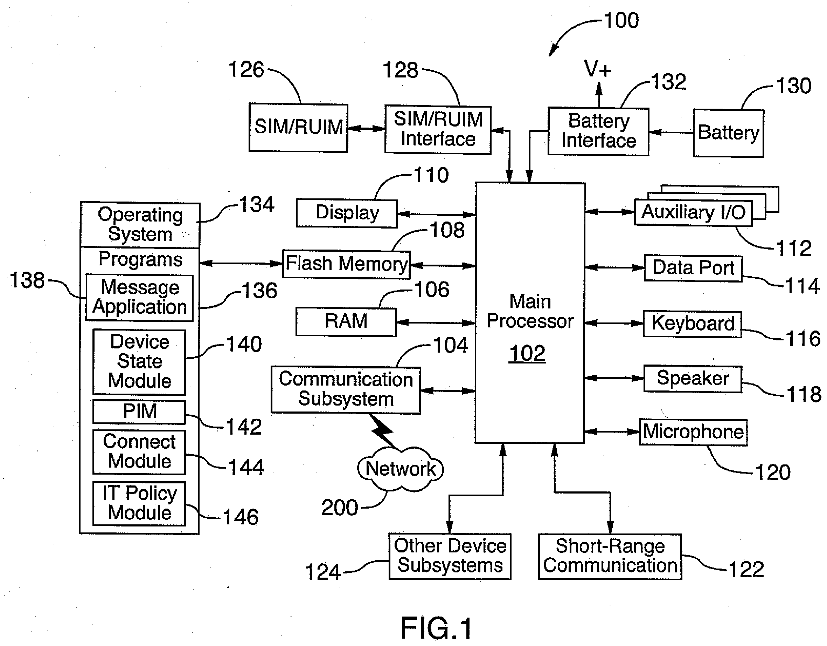

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIG. 1.

Referring to FIG. 1, shown therein is a block diagram of an exemplary embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one exemplary implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard assembly 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

The mobile device 100 also includes a connect module 144, and an IT policy module 146. The connect module 144 implements the communication protocols that are required for the mobile device 100 to communicate with the wireless infrastructure and any host system, such as an enterprise system, that the mobile device 100 is authorized to interface with.

The connect module 144 includes a set of APIs that can be integrated with the mobile device 100 to allow the mobile device 100 to use any number of services associated with the enterprise system. The connect module 144 allows the mobile device 100 to establish an end-to-end secure, authenticated communication pipe with the host system. A subset of applications for which access is provided by the connect module 144 can be used to pass IT policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the mobile device 100. These software applications can be third party applications, which are added after the manufacture of the mobile device 100. Examples of third party applications include games, calculators, utilities, etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

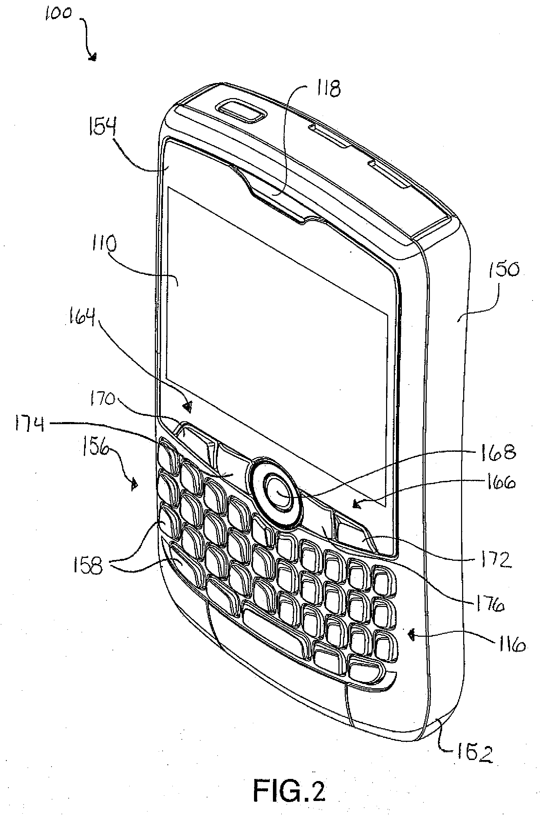

Referring now to FIG. 2, the external components of the mobile device 100 will now be described, although it will be appreciated that the device 100 is not limited to the external components described herein, and that additional features may be appropriate. The internal components of the device 100, such as the processor 102, RAM 106, flash memory 108, SIM card 126 and battery 130, for example, are enclosed in a housing 150 that is sized to comfortably fit in a user's hand, as known in the art. The housing 150 is preferably manufactured of a lightweight and durable material, such as a thermoplastic, leather, or the like.

The housing 150 preferably has rounded or curved edges 152 to enable the user to comfortably grasp the device 100, although it is recognized that other similar shapes may be suitable. It is contemplated that rounded edges 152 provide a more comfortable fit in the user's palm than straight or right-angle edges, which may cause discomfort if the device 100 is held in the user's hand for long periods of time.

A front face 154 of the device includes the display 110, the speaker 118 and the keyboard assembly 116. The display 110 is preferably arranged in the upper portion of the front face 154, and defines an opening for receiving the speaker 118. As seen in FIG. 2, the speaker 118 is recessed in the display 110 for preventing interference with the user's pocket or a device holster/carrying case, for example, which could scratch and cause damage to the speaker. To further protect the speaker 118, a mesh cover (not shown) can be provided over the speaker for preventing the entry of dirt, moisture and other contaminants.

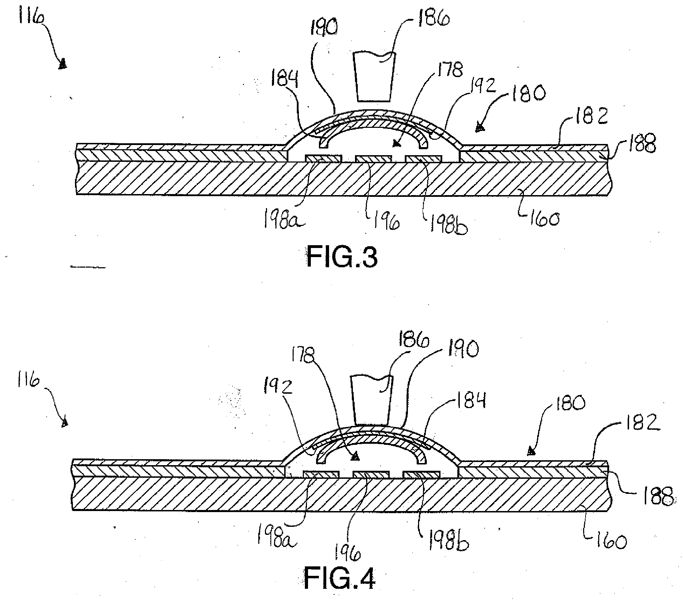

The keyboard assembly, generally designated 116, is typically provided in the lower portion of the front face 154, and includes, among other things, a keyboard 156 having a plurality of raised, depressible keys 158 that are configured for providing tactile feedback to the user during typing. The keyboard 156 is preferably a full QWERTY keyboard, as known in the art, although other types of keyboards may be appropriate, such as, among others, a reduced keyboard. The keyboard assembly 116 further includes a circuit board 160 provided within the housing 150, and a dome sheet assembly 180 provided between the circuit board and the keyboard 156 (FIGs. 3-6). The components of the keyboard assembly 116 will be described in further detail below.

A navigation pane 164 is preferably provided between the display 110 and the keyboard 116, and includes a plurality of function keys 166 and a navigational input means 168. The function keys 166 preferably include a send key 170, an end key 172, a menu key 174 and a "back" or return key 176, as known in the art. Although other arrangements may be appropriate, the send and end keys 170, 172 are preferably located on the opposite far edges of the navigation pane 164, as seen in FIG. 2. The menu and return keys 174, 176 are located on either side of the navigational input means 168. Preferably, the navigational input means 168 is a trackball, which is configured for enabling cursor movement in all directions, as well as enabling selection of an item when pushed inward, as known in the art. The trackball 168 is preferably partially recessed in the housing 150, to provide space for the user's thumb to efficiently utilize the trackball, and to prevent interference and damage to the trackball when the device 100 is inserted into the user's pocket, bag or the like.

Referring now to FIGs. 2-6, and as mentioned briefly above, the keyboard assembly 116 includes the keyboard 156 having the plurality of keys 158 thereon. The keyboard 156 is preferably a full QWERTY keyboard, wherein each of the keys 158 is associated with a single letter and a secondary symbol (such as a number or punctuation mark), that can be accessed by engaging an "ALT" key and the desired key, as known in the art. However, it is appreciated that other keyboard arrangements may be appropriate, such as QWERTZ, AZERTY, and Dvorak configurations, as well as reduced keyboard configurations.

The assembly 116 also includes the circuit board 160 provided within the housing 150 and having a plurality of contact assemblies 178 thereon. A dome sheet assembly 180 is also provided and is arranged between the keyboard 156 and the circuit board 160, the dome sheet assembly including a dome carrier 182 configured for carrying a plurality of domes 184. As known in the art, each of the keys 158 also includes a projection or actuator 186 extending therefrom, the projection being in alignment with and configured for engaging a corresponding portion of the dome carrier 182 during operation, which is described in further detail below.

A gap is defined between the circuit board 160 and the dome sheet assembly 180, preferably by a spacer 188. It is contemplated that the spacer 188 is manufactured from a die cut plastic film, although it is appreciated that other materials with similar properties may be suitable, depending on the application. The spacer 188 is configured for providing a clearance between the dome 184 and the corresponding contact assembly 178. It is also contemplated that a physical spacer may not be provided in the keyboard assembly 116. Specifically, in such a construction, each of the domes 184 is secured to a corresponding one of the key actuators 186, defining a gap between the circuit board 160 and the dome sheet assembly 180 (configuration not shown).

The dome carrier 182 includes a plurality of raised portions 190, each of which corresponds to one of the plurality of keys 158 of the keyboard 156. As seen in FIGs. 3 and 4, each of the projections 186 is configured for engaging a corresponding one of the raised portions 190 when the key is actuated by a user.

To secure the dome 184 to the dome carrier 182, an adhesive 192 is provided between the dome carrier and the dome. As known in the art, the dome 184 is adhered to the raised portion 188, and is configured for engaging a corresponding one of the contact assemblies 178 upon actuation of the key 158 and subsequent collapsing of the dome 184.

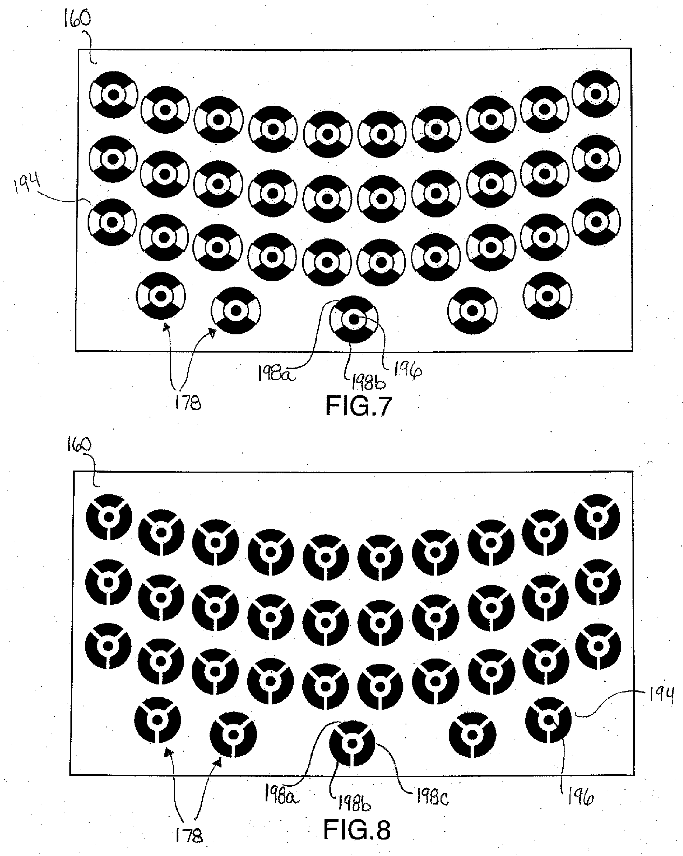

Referring now to FIGs. 7 and 8, the plurality of contact assemblies 178 each includes a plurality of contacts 194 arranged in a pattern on the circuit board 160, each of the contact assemblies corresponding to one of plurality of domes 184 (see FIGs. 3-6). As seen in FIG. 7, each of the contact assemblies 194 includes a center contact 196, and a pair of contacts located on opposing sides of the center contact, such that a space is defined between the pair of contacts and the center contact. More specifically, the pair of contacts includes a first contact 198a and a second contact 198b, the first and second contacts being substantially curved to partially surround the center contact 196 in a substantially circular configuration, although other configurations for the contacts may be suitable.

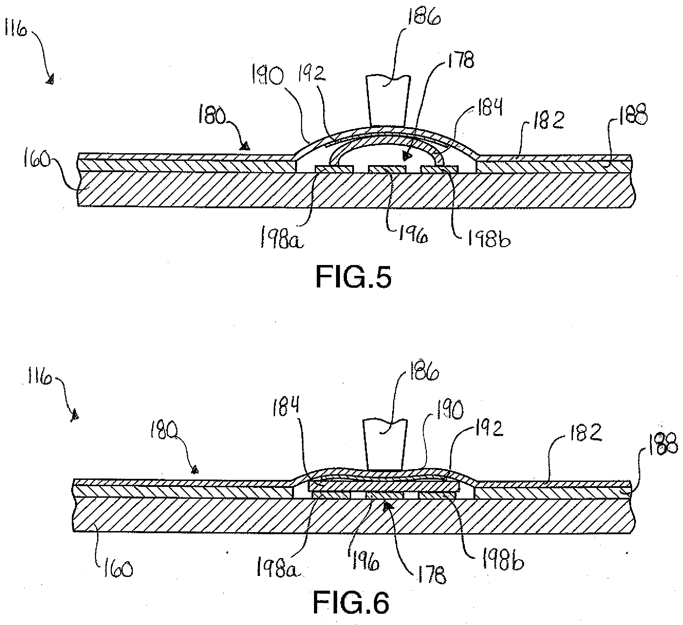

During operation, upon a first actuation of one of the keys 158, a first signal is connected between the dome 184 and the first and second contacts 198a, 198b, as seen in FIG. 5. For example, upon the first actuation, a navigation method could be activated. Specifically, upon the first actuation of the "e" key, for example, a cursor (not shown) could be moved on the screen in an upward direction. However, it is to be understood that various alternate implementations of the keys during the first actuation are possible, such as executing speed-dialing functions, shortcut keys, and opening various applications, for example. Upon a second actuation of the key 158, a second signal is connected between the dome and the first, second and center contacts 198a, 198b and 196, respectively, as shown in FIG. 6. For example, upon the second actuation of the "e" key, the character "e" will appear on the display (i.e., in the text of an email, for example), although it is recognized that alternate implementations of the keys during the second actuation may be possible, depending on the application.

As known in the art, the second actuation occurs after the first actuation, and requires a greater force than that required to activate the first actuation. Specifically, when the user applies the first actuation of the key 158, a first force is exerted on the dome sheet assembly 180 (i.e., a force less than that of a predetermined value) and the first signal is connected. When the user applies the second actuation of the key 158, a second force is exerted on the dome sheet assembly 180 (i.e., a force greater than that of the predetermined value), and the second signal is connected.

During operation of the keyboard assembly 116, it is possible for the user to bypass the first actuation (and thereby the first command/function assigned to the particular key) by exerting an initial amount of force that exceeds the predetermined value. In other words, by exerting the second force upon an initial actuation of the key 158, the second signal is connected and the "e" key will appear on the display, for example.

An alternate embodiment of the circuit board 160 is shown in FIG. 8. Specifically, the contacts 194 are arranged in a second pattern that includes the center contact 196, and three contacts configured to surround the center contact, such that a space is defined between each of the contacts and the center contact 196. More specifically, the three contacts includes the first contact 198a, the second contact 198b and a third contact 196c, where the first, second and third contacts 198a-c are substantially curved to surround the center contact 196 in a substantially circular configuration, although it is recognized that other configurations may be appropriate.

Similar to that described above with respect to FIG. 7, during operation of the keyboard 156, upon a first actuation of one of the keys, a first signal is connected between the dome 184 and the first, second and third contacts 198a, b and c, respectively. Upon a second actuation of the key 158, a second signal is connected between the dome 184 and the first, second, third and center contacts 198a, 198b, 198c and 196, respectively, the second actuation occurring after the first actuation and being greater in force than the first actuation.

It is contemplated that the present assembly is more cost efficient than conventional keyboard assemblies having two-stage switches. Specifically, it is contemplated that the spacer (either physical or otherwise) enables a more cost efficient keyboard assembly to be constructed, because in the present assembly, tactile feeling is not present during the first stage of key actuation, but is only present in the second stage of key actuation. This is in contrast to most conventional keyboard assemblies having two-stage switches, which typically try to maintain tactile feeling in the first stage. Accordingly, these assemblies are generally more complex in their construction, adding cost to the product.

While a particular embodiment of the present keyboard assembly has been described herein, it will be appreciated by those skilled in the art that changes and modifications may be made thereto without departing from the disclosure in its broadest aspects and as set forth below.

## Claims

1. A keyboard assembly for a mobile device having a housing, comprising:
a circuit board (160) provided within the housing and having a plurality of contact assemblies (178) thereon;
a keyboard (156) having a plurality of keys and being provided in a front face of the housing each of said keys having a single actuator (186); and
a dome sheet assembly (180) arranged between the keyboard and the circuit board, the dome sheet assembly (180) including a dome carrier (182) having a plurality of raised portions (190) separated by a plurality of flat portions and being configured for carrying a plurality of domes (184), each of the domes (184) secured to a corresponding one of the raised portions;
each of the domes (184) including an outer periphery and a central portion, the outer periphery protruding towards a corresponding one of said contact assemblies (178) and configured for directly contacting a corresponding one of said contact assemblies (178);
wherein a gap is defined between the circuit board (160) and the dome sheet assembly (180);
wherein each of said plurality of contact assemblies (178) includes a plurality of contacts arranged in a pattern on said circuit board, each of said contact assemblies (178) corresponding to one of said plurality of domes (184); **characterized in that**
said contact assemblies (178) each include a center contact (196), and three contacts (198a, 198b, 198c) configured to surround said center contact, such that a space is defined between each of said contacts and said center contact, said three contacts (198a, 198b, 198c) including a first contact, a second contact and a third contact, the first, second and third contacts being substantially curved to surround said center contact (196) in a substantially circular configuration, wherein upon a first actuation of one of said keys, the outer periphery of a corresponding one of said domes is configured to engage a first signal with said first, second and third contacts (198a, 198b, 198c) and wherein upon a second actuation of one of said keys, the outer periphery and the central portion of a corresponding one of said domes are configured to engage a second signal with said first, second, third (198a, 198b, 198c) and center (196) contacts, said second actuation occurring after said first actuation.

2. The keyboard assembly of claim 1 wherein each said dome (184) is in alignment with a corresponding one of said keys.

3. The keyboard assembly of claim 1 wherein said keyboard is a full QWERTY keyboard.

4. The keyboard assembly of claim 1 further including a spacer configured for providing said gap between said circuit board (160) and said dome sheet assembly (180).

5. The keyboard assembly of claim 1 wherein said domes (184) are secured to said raised portions of said dome carrier (182) by an adhesive.

6. A mobile device comprising:
a keyboard assembly according to any preceding claim.

## Patentansprüche

1. Tastaturanordnung für eine mobile Vorrichtung, die ein Gehäuse aufweist, umfassend:
eine Leiterplatte (160), die innerhalb des Gehäuses vorgesehen ist und mehrere Kontaktanordnungen (178) darauf aufweist;
eine Tastatur (156), die mehrere Tasten aufweist und in einer Vorderseite des Gehäuses vorgesehen ist, wobei jede der Tasten ein einziges Betätigungselement (186) aufweist; und
eine Kuppelfolienanordnung (180), die zwischen der Tastatur und der Leiterplatte angeordnet ist, wobei die Kuppelfolienanordnung (180) einen Kuppelträger (182) umfasst, der mehrere erhabene Abschnitte (190) aufweist, die durch mehrere ebene Abschnitte getrennt sind, und zum Tragen von mehreren Kuppeln (184) konfiguriert sind, wobei jede der Kuppeln (184) an einem entsprechenden der erhabenen Abschnitte gesichert ist;
wobei jede der Kuppeln (184) einen Außenumfang und einen zentralen Abschnitt umfasst, wobei der Außenumfang in Richtung einer entsprechenden der Kontaktanordnungen (178) vorsteht und zum direkten Berühren einer entsprechenden der Kontaktanordnungen (178) konfiguriert ist;
wobei ein Spalt zwischen der Leiterplatte (160) und der Kuppelfolienanordnung (180) definiert ist;
wobei jede der mehreren Kontaktanordnungen (178) mehrere Kontakte umfasst, die in einem Muster auf der Leiterplatte angeordnet sind, wobei jede der Kontaktanordnungen (178) einer der mehreren Kuppeln (184) entspricht; **dadurch gekennzeichnet, dass**
die Kontaktanordnungen (178) jeweils einen Mittelkontakt (196) und drei Kontakte (198a, 198b, 198c), die dazu konfiguriert sind, den Mittelkontakt zu umgeben, umfassen, so dass ein Raum zwischen jedem der Kontakte und dem Mittelkontakt definiert wird, wobei die drei Kontakte (198a, 198b, 198c) einen ersten Kontakt, einen zweiten Kontakt und einen dritten Kontakt umfassen, wobei der erste, der zweite und der dritte Kontakt im Wesentlichen gekrümmt sind, um den Mittelkontakt (196) in einer im Wesentlichen kreisförmigen Konfiguration zu umgeben, wobei der Außenumfang einer entsprechenden der Kuppeln dazu konfiguriert ist, nach einer ersten Betätigung einer der Tasten ein erstes Signal mit dem ersten, dem zweiten und dem dritten Kontakt (198a, 198b, 198c) zu erfassen, und wobei der Außenumfang und der zentrale Abschnitt einer entsprechenden der Kuppeln dazu konfiguriert sind, nach einer zweiten Betätigung einer der Tasten ein zweites Signal mit dem ersten, dem zweiten und dem dritten Kontakt (198a, 198b, 198c) und dem Mittelkontakt (196) zu erfassen, wobei die zweite Betätigung nach der ersten Betätigung erfolgt.

2. Tastaturanordnung nach Anspruch 1, wobei jede der Kuppeln (184) mit einer entsprechenden der Tasten ausgerichtet ist.

3. Tastaturanordnung nach Anspruch 1, wobei die Tastatur eine QWERTZ-Volltastatur ist.

4. Tastaturanordnung nach Anspruch 1, die weiterhin einen Abstandshalter umfasst, der zum Bereitstellen des Spalts zwischen der Leiterplatte (160) und der Kuppelfolienanordnung (180) konfiguriert ist.

5. Tastaturanordnung nach Anspruch 1, wobei die Kuppeln (184) durch einen Klebstoff an den erhabenen Abschnitten des Kuppelträgers (182) gesichert sind.

6. Mobile Vorrichtung, umfassend:
eine Tastaturanordnung nach einem vorhergehenden Anspruch.

## Revendications

1. Ensemble de clavier pour un dispositif mobile ayant un boîtier, comprenant :
une carte de circuit imprimé (160) disposée à l'intérieur du boîtier et ayant une pluralité d'ensembles de contacts (178) sur celle-ci ;
un clavier (156) ayant une pluralité de touches et étant disposé dans une face avant du boîtier, chacune desdites touches ayant un actionneur unique (186) ; et
un ensemble de feuille de dômes (180) agencé entre le clavier et la carte de circuit imprimé, l'ensemble de feuille de dômes (180) comprenant un support de dômes (182) ayant une pluralité de parties surélevées (190) séparées par une pluralité de parties plates et étant configuré pour porter une pluralité de dômes (184), chacun des dômes (184) étant fixé à l'une correspondante des parties surélevées ;
chacun des dômes (184) comprenant une périphérie externe et une partie centrale, la périphérie externe faisant saillie en direction de l'un correspondant desdits ensembles de contacts (178) et étant configurée pour venir directement en contact avec l'un correspondant desdits ensembles de contacts (178) ;
dans lequel un intervalle est défini entre la carte de circuit imprimé (160) et l'ensemble de feuille de dômes (180) ;
dans lequel chacun de ladite pluralité d'ensembles de contacts (178) comprend une pluralité de contacts agencés selon un motif sur ladite carte de circuit imprimé, chacun desdits ensembles de contacts (178) correspondant à l'un de ladite pluralité de dômes (184) ; **caractérisé en ce que**
lesdits ensembles de contacts (178) comprennent chacun un contact central (196) et trois contacts (198a, 198b, 198c) configurés pour entourer ledit contact central, de telle sorte qu'un espace est défini entre chacun desdits contacts et ledit contact central, lesdits trois contacts (198a, 198b, 198c) comprenant un premier contact, un deuxième contact et un troisième contact, les premier, deuxième et troisième contacts étant sensiblement incurvés pour entourer ledit contact central (196) dans une configuration sensiblement circulaire, où, lors d'un premier actionnement de l'une desdites touches, la périphérie externe de l'un correspondant desdits dômes est configurée pour associer un premier signal avec lesdits premier, deuxième et troisième contacts (198a, 198b, 198c) et où, lors d'un second actionnement de l'une desdites touches, la périphérie externe et la partie centrale de l'un correspondant desdits dômes sont configurées pour associer un second signal avec lesdits premier, deuxième, troisième (198a, 198b, 198c) contacts et le contact central (196), ledit second actionnement se produisant après ledit premier actionnement.

2. Ensemble de clavier selon la revendication 1, dans lequel chacun desdits dômes (184) est en alignement avec l'une correspondante desdites touches.

3. Ensemble de clavier selon la revendication 1, dans lequel ledit clavier est un clavier QWERTY complet.

4. Ensemble de clavier selon la revendication 1, comprenant en outre une entretoise configurée pour fournir ledit intervalle entre ladite carte de circuit imprimé (160) et ledit ensemble de feuille de dômes (180).

5. Ensemble de clavier selon la revendication 1, dans lequel lesdits dômes (184) sont fixés auxdites parties surélevées dudit support de dômes (182) par un adhésif.

6. Dispositif mobile comprenant :
un ensemble de clavier selon une quelconque revendication précédente.
